# EUROPÄISCHE PATENTSCHRIFT

(11) **EP 3 790 168 B1**
(45) Veröffentlichungstag und Bekanntmachung des Hinweises auf die Patenterteilung: **22.01.2025**
(21) Anmeldenummer: 20190222.8
(22) Anmeldetag: 10.08.2020
(51) Int. Cl.: H02K 1/278

(54) **ROTOR FÜR EINE ELEKTRISCHE MASCHINE MIT STEGFÖRMIGEN HALTEELEMENTEN**
ROTOR FOR AN ELECTRIC MACHINE WITH BAR-SHAPED HOLDING ELEMENTS
ROTOR POUR UNE MACHINE ÉLECTRIQUE POURVU D'ÉLÉMENTS DE MAINTIEN EN FORME D' ÉLÉMENT JOINTIF

(30) Priorität: 04.09.2019 DE 102019213448
(43) Veröffentlichungstag der Anmeldung: 10.03.2021
(73) Patentinhaber: VOLKSWAGEN AG, 38440 Wolfsburg (DE)
(72) Erfinder: Fries, Holger, 38640 Goslar (DE); Lüders, Ralf, 31224 Peine (DE); Bode, Behrend, 31228 Peine (DE); Boseniuk, Florian, 30629 Hannover (DE)

(56) Entgegenhaltungen:
- WO-A1-2005/099065
- WO-A2-2012/049236
- DE-A1- 102008 043 144
- DE-A1- 102014 223 330

## Beschreibung

Die Erfindung betrifft einen Rotor für eine elektrische Maschine, insbesondere für einen Elektromotor oder einen elektrischen Generator, mit einer Rotorwelle, mit einem drehfest mit der Rotorwelle verbundenen und die Rotorwelle umgebenden Grundkörper und mit einer Mehrzahl von Permanentmagneten, die außenseitig in einer ringförmigen Anordnung mit dem Grundkörper verbunden sind.

Die Permanentmagnete eines solchen Rotors müssen derart mit dem Grundkörper verbunden sein, dass diese im Betrieb einer den Rotor umfassenden elektrischen Maschine gegen ein Verlieren gesichert sind. Dies wird üblicherweise durch eine die Permanentmagnete und den Grundkörper umgebende Umhüllung aus Metall oder Kunststoff oder durch das Einstecken der Permanentmagnete in dafür vorgesehenen Taschen in dem Grundkörper realisiert. Derartige Umhüllungen für die Permanentmagnete führen jedoch dazu, dass der magnetisch relevante Abstand, der zwischen den Permanentmagneten des Rotors sowie den elektrischen Spulen des den Rotor umgebenden Stators ausgebildet ist, relativ groß gewählt werden muss, da dieser nicht nur durch den für eine kontaktfreie Rotation des Rotors innerhalb des Stators erforderlichen Spalt sondern auch durch die radiale Dicke der Umhüllung bestimmt wird. Ein relativ großer magnetisch relevanter Abstand führt jedoch zu einem relativ schlechten Wirkungsgrad der elektrischen Maschine.

Um die sich daraus ergebenden Nachteile möglichst gering zu halten, wird üblicherweise versucht, die Umhüllung mit einer möglichst geringen radialen Dicke auszubilden. Dies ist jedoch entweder nur bedingt möglich, beispielsweise bei einer aus Kunststoff ausgebildeten Umhüllung, die mittels Spritzgießens hergestellt wurde, was üblicherweise Wanddicken von mindestens 0,5 Millimetern erfordert. Weiterhin sind möglichst dünnwandige Umhüllungen, die als separate Bauteile hergestellt und während der Montage der Rotoren über die bereits mit dem Grundkörper verbundenen Permanentmagneten gestülpt werden, äußerst anfällig für Beschädigungen, wodurch der Montageprozess negativ beeinflusst wird.

Eine elektrische Maschine mit einer Umhüllung aus Metall, die entweder als massiver Hohlzylinder oder mit einer Käfigstruktur ausgebildet sein kann, ist aus der DE 38 44 074 C2 bekannt.

Weiterhin offenbart die DE 43 31 803 A1 einen Elektromotor, bei dem zur Erleichterung der Montage des Rotors die Permanentmagnete mittels Halteklammern an einem Träger gehalten werden, wobei die Halteklammern stegförmige Abschnitte aufweisen, die in außenseitige Vertiefungen der Permanentmagnete ragen. Ergänzend dazu sind auch bei dem Elektromotor gemäß der DE 43 31 803 A1 die Permanentmagnete mittels einer diese sowie die Halteklammern umgebenden Umhüllung an einem Grundkörper des Rotors befestigt.

Die WO 2012/049236 A2 offenbart einen Rotor für einen Elektromotor, bei dem Permanentmagnete von einem aus zwei Halbschalen bestehenden Blechkäfig fixiert sind.

Die DE 10 2014 223 330 A1 beschreibt einen Rotor für einen Elektromotor, bei dem Halteelemente für Permanentmagnete vorgesehen sind, die sich von den beiden Stirnseiten eines Grundkörpers des Rotors und jeweils nur abschnittsweise über die entlang der Rotationsachse des Rotors führende Längserstreckung der zugeordneten Permanentmagnete erstrecken. Dabei sind die jeweils zwei von unterschiedlichen axialen Enden des Rotors ausgehenden und einem Permanentmagneten zugeordneten Halteelemente endseitig miteinander verbunden.

Der Erfindung liegt die Aufgabe zugrunde, bei einer elektrischen Maschine auf möglichst vorteilhafte Weise den magnetisch relevanten Abstand zwischen den Permanentmagneten des Rotors und dem Stator der elektrischen Maschine möglichst klein auszubilden, um einen möglichst hohen Wirkungsgrad der elektrischen Maschine zu erreichen.

Diese Aufgabe wird mittels einer elektrischen Maschine gemäß dem Patentanspruch 6, die einen Rotor gemäß dem Patentanspruch 1 umfasst, gelöst. Vorteilhafte Ausgestaltungsformen eines solchen erfindungsgemäßen Rotors und einer solchen erfindungsgemäßen elektrischen Maschine sind Gegenstände der weiteren Patentansprüche und/oder ergeben sich aus der nachfolgenden Beschreibung der Erfindung.

Erfindungsgemäß ist ein Rotor für eine elektrische Maschine, insbesondere für einen Elektromotor (z.B. für einen Antriebsmotor einer Pumpe in einem Kraftfahrzeug) oder einen elektrischen Generator, vorgesehen, der eine Rotorwelle, einen mit der Rotorwelle drehfest verbundenen und die Rotorwelle umgebenden Grundkörper und eine Mehrzahl von Permanentmagneten, die außenseitig in einer ringförmigen Anordnung mit dem Grundkörper verbunden sind, umfasst. Dabei sind eine Mehrzahl von stegförmigen Halteelementen vorgesehenp, die jeweils mindestens einen der Permanentmagnete außenseitig überdecken, insbesondere direkt kontaktierend überdecken. Dabei kann vorgesehen sein, dass sich die Halteelemente (zumindest teilweise) jeweils nur über einen Abschnitt der oder über die gesamte Längserstreckung des oder der zugeordneten Permanentmagnete erstrecken. Erfindungsgemäß ist weiterhin vorgesehen, dass die Halteelemente den oder die jeweils zugeordneten Permanentmagnete entweder an deren Außenfläche ausschließlich in einem bezüglich der Umfangsrichtung des Rotors zentral gelegenen Abschnitt (der vorzugsweise auch die exakte Mitte umfasst) oder ausschließlich an einer Seitenfläche je Permanentmagnet überdecken.

Die Halteelemente sollen demnach zumindest die Kanten der Permanentmagnete, an denen die jeweiligen Außenflächen in eine der zugehörigen Seitenflächen übergehen und die vorzugsweise parallel entlang der Rotationsachse des Rotors verlaufen, nicht überdecken. Dadurch ist es möglich, einen möglichst kleinen magnetisch wirksamen Abstand zwischen den Permanentmagneten eines erfindungsgemäßen Rotors und dem dazu vorzugsweise koaxial angeordneten Stator einer erfindungsgemäßen elektrischen Maschine auszubilden. Sofern die Permanentmagnete außenseitig ausschließlich von den Halteelementen umgeben beziehungsweise überdeckt sind, wie dies vorzugsweise vorgesehen ist, kann der (kleinste) Abstand zwischen den Permanentmagneten und dem Stator sogar bis auf die radiale Höhe desjenigen Spalts reduziert werden, der unter Berücksichtigung von Form- und Lagetoleranzen für eine kontaktfreie Rotation des Rotors relativ zu dem Stator erforderlich ist.

Für eine Überdeckung der Permanentmagnete durch zumindest einige der Halteelemente ausschließlich an einer Seitenfläche je Permanentmagnet ist eine Formgebung für die Seitenflächen erforderlich, bei der diese zumindest abschnittsweise nicht exakt radial bezüglich der Rotationsachse des Rotors verlaufen. Dies kann beispielsweise dadurch realisiert werden, dass die Seitenflächen oder zumindest Abschnitte davon jeweils in einer Ebene verlaufen, die nicht exakt radial bezüglich der Rotationsachse des Rotors ausgerichtet ist. Ebenso kann beispielsweise ein stufenförmiger Verlauf der Seitenflächen oder es können Hinterschnitte (bezüglich der radialen Richtung) in den Seitenflächen vorgesehen sein. Erfindungsgemäß wird als Außenfläche der Permanentmagnete diejenige Oberfläche verstanden, die die jeweiligen Permanentmagnete radial außen liegend begrenzen und dabei die Querschnittsfläche dieser Permanentmagnete bezüglich der Umfangsrichtung zum größten Teil und insbesondere zu mindestens 80% oder 90% begrenzen.

Eine Ausgestaltung des erfindungsgemäßen Rotors, bei der die Halteelemente die jeweiligen Permanentmagnete zumindest auch an deren Außenfläche in einem bezüglich der Umfangsrichtung des Rotors mittigen Abschnitt überdecken, kann insbesondere dann vorteilhaft umsetzbar sein, wenn die Permanentmagnete rechteckige Querschnittsflächen aufweisen. Derartige Permanentmagnete, die auch als Blockmagnete bekannt sind, werden vielfach bei elektrischen Maschinen eingesetzt, weil diese kostengünstig herstellbar sind. Ein Nachteil solcher Permanentmagnete liegt jedoch darin, dass diese einen Außenumfang des Rotors definieren, der im Querschnitt in etwa einem Vieleck entspricht, was in Kombination mit einem Stator, der ein im Wesentlichen zylindrisches Innenvolumen begrenzt, wie dies auch bei einer erfindungsgemäßen elektrischen Maschine vorzugsweise vorgesehen ist, dazu führt, dass der Abstand zwischen den Permanentmagneten und dem Stator über dem Umfang des Rotors ungleichmäßig und, bezüglich der Umfangsrichtung des Rotors, in der Mitte der einzelnen Permanentmagnete am größten oder zumindest relativ groß ist. Erfindungsgemäß können demnach insbesondere diese Abschnitte der Außenflächen der Permanentmagnete in vorteilhafter Weise genutzt werden, um durch einen überdeckenden Kontakt mit den Halteelementen eine zumindest radial wirksame Verbindung der Permanentmagnete mit dem Grundkörper zu realisieren. Die Überdeckung beziehungsweise Kontaktierung dieser Abschnitte durch die Halteelemente ist dabei hinsichtlich der Erzielung eines möglichst kleinen magnetisch wirksamen Abstands nicht nachteilig, weil der kleinste Abstand bei Permanentmagneten mit rechteckigen Querschnittsflächen ohnehin im Bereich der Kanten, die den Übergang zwischen den Außenflächen und den Seitenflächen der Permanentmagnete darstellen, liegt. Die Halteelemente verhindern somit nicht, diesen kleinsten Abstand auf das für einen kontaktfreien Betrieb erforderlich Maß zu minimieren.

Um eine möglichst gute Verbindung der Permanentmagnete mit dem Grundkörper zu realisieren, kann vorzugsweise vorgesehen sein, dass auch bei solchen Permanentmagneten mit rechteckigen Querschnittsflächen Halteelemente vorgesehen sind, die die jeweils zugeordneten Permanentmagnete ausschließlich an einer Seitenfläche überdecken.

Sofern die Permanentmagnete kreisringsegmentförmige Querschnittsflächen aufweisen, ist es sinnvoll, dass ausschließlich solche Halteelemente vorgesehen sind, die die jeweils zugeordneten Permanentmagnete ausschließlich an einer Seitenfläche überdecken. Der kleinste Abstand zwischen den Permanentmagneten und dem Stator kann dann vorzugsweise über der gesamten Außenfläche der Permanentmagnete vorliegen.

Erfindungsgemäß ist in einer ersten Ausgestaltungsform vorgesehen, dass sich die oder zumindest einige der Halteelemente von den beiden Stirn- beziehungsweise längsaxialen Endseiten des Grundkörpers jeweils nur abschnittsweise über die entlang der Rotationsachse des Rotors führende Längserstreckung des oder der zugeordneten Permanentmagnete erstrecken und an dem entsprechenden anderen axialen Ende frei enden. Hierfür sollten die Halteelemente jedoch relativ stabil beziehungsweise biegesteif dimensioniert werden, um eine ausreichend sichere Verbindung der Permanentmagnete mit dem Grundkörper des Rotors zu erreichen.

Andererseits ist in einer zweiten Ausgestaltungsform des erfindungsgemäßen Rotors vorgesehen, dass sich die oder zumindest einige der Halteelemente jeweils über die gesamte Längserstreckung des oder der zugeordneten Permanentmagnete erstrecken und dass diese an einem der oder an den beiden stirnseitigen Enden der Permanentmagnete derart direkt oder indirekt miteinander verbunden sind, dass diese eine nach außen gerichtete radiale Belastung dieser Halteelemente gegenseitig abstützen. Auch dadurch wird ermöglicht, mit relativ schwach beziehungsweise biegeweich dimensionierten Halteelementen eine ausreichend sichere Verbindung der Permanentmagnete mit dem Grundkörper des Rotors zu realisieren.

Dabei ist erfindungsgemäß vorgesehen, dass alle oder zumindest einige der Halteelemente an beiden ihrer längsaxialen Enden an einen Verbindungsring angebunden sind. Diese Anbindung kann lösbar oder unlösbar, dann auch einstückig, vorgesehen sein.

Konkret ist erfindungsgemäß vorgesehen, dass diese Halteelemente mit einem ihrer längsaxialen Enden unlösbar an einen ersten Verbindungsring angebunden sind. Dies ermöglicht, sämtliche Halteelemente in einer durch den Verbindungsring gesicherten Anordnung gleichzeitig zu montieren beziehungsweise auf die bereits vormontierte Kombination aus Grundkörper und Permanentmagneten aufzuschieben. Anschließend erfolgt dann noch eine Sicherung der anderen längsaxialen Enden der Halteelemente durch eine lösbare Anbindung an einen zweiten Verbindungsring oder durch eine Verbindung untereinander.

Bevorzugt kann vorgesehen sein, dass die Halteelemente und/oder der oder die Verbindungsringe, sofern vorhanden, aus einem oder mehreren Kunststoffen (vorzugsweise aus PPS) ausgebildet sind. Dadurch sind diese kostengünstig, insbesondere mittels Spritzgießens, herstellbar. Weiterhin können diese Komponenten dadurch relativ geringe Massen aufweisen.

Die Erfindung wird nachfolgend anhand von in den Zeichnungen dargestellten Ausgestaltungsbeispielen näher erläutert. In den Zeichnungen zeigt, teilweise in vereinfachter Darstellung:
- Fig. 1:: einen Rotor für eine elektrische Maschine gemäß dem Stand der Technik in einer perspektivischen Darstellung;
- Fig. 2:: einen Querschnitt durch einen Abschnitt des Rotors gemäß der Fig. 1;
- Fig. 3:: einen Querschnitt durch einen Abschnitt eines erfindungsgemäßen Rotors gemäß einer ersten Ausgestaltungsform;
- Fig. 4:: eine erfindungsgemäße elektrische Maschine mit einem Rotor gemäß der Fig. 3 in einem teilweisen Querschnitt;
- Fig. 5:: den Rotor der elektrischen Maschine gemäß der Fig. 4 in einer perspektivischen Darstellung;
- Fig. 6:: einen Rotor gemäß einer Ausgestaltungsform, die nicht von den Patentansprüchen erfasst ist, in einer Seitenansicht;
- Fig. 7:: einen erfindungsgemäßen Rotor gemäß einer zweiten Ausgestaltungsform in einer perspektivischen Darstellung
- Fig. 8:: den Rotor gemäß der Fig. 7 in einer Ansicht von hinten; und
- Fig. 9:: einen Rotor gemäß einer dritten Ausgestaltungsform in einer Ansicht von hinten.

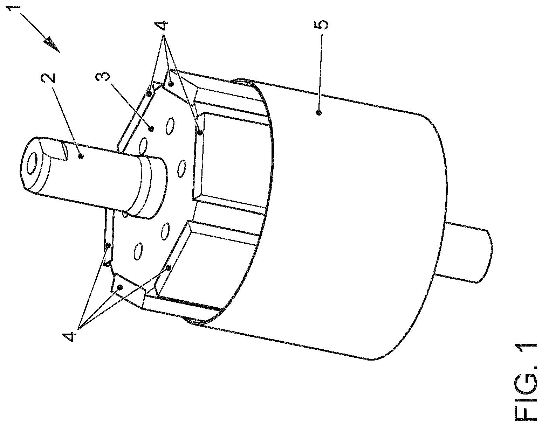

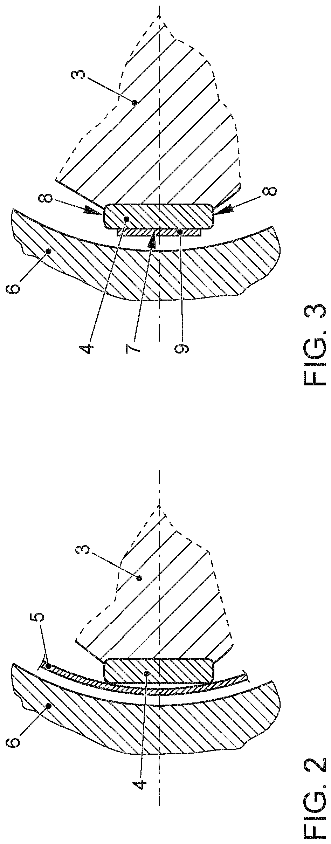

Die Fig. 1 und 2 zeigen einen Rotor 1 für eine elektrische Maschine gemäß dem Stand der Technik. Dieser Rotor 1 umfasst eine Rotorwelle 2, einen drehfest mit der Rotorwelle 2 verbundenen und die Rotorwelle 2 umgebenden Grundkörper 3 und eine Mehrzahl von Permanentmagneten 4, die als Blockmagnete ausgebildet sind und die demnach rechteckige Querschnittsflächen aufweisen. Die Permanentmagnete 4 sind dabei in einer ringförmigen Anordnung außenseitig mit dem Grundkörper 3 verbunden. Der Verbindung der Permanentmagnete 4 mit dem Grundkörper 3 dient zumindest auch eine rohrförmige Umhüllung 5, die beispielsweise aus Metall oder Kunststoff ausgebildet sein kann und die in der Fig. 1 nur teilweise dargestellt ist.

Bei einem solchen Rotor 1 gemäß dem Stand der Technik ergibt sich ein relativ großer magnetisch wirksamer Abstand zwischen den Permanentmagneten 4 des Rotors 1 und einem Stator 6 einer diese beiden Komponenten umfassenden elektrischen Maschine, da bei der konstruktiven Auslegung des kleinsten Abstands zwischen den Permanentmagneten 4 und des Stators 6 einerseits eine Spaltbreite zwischen der Umhüllung 5 und dem Stator 6, die so groß dimensioniert sein muss, dass diese unter Berücksichtigung der zulässigen Form- und Lagetoleranzen einen Kontakt zwischen dem Rotor 1 und dem Stator 6 vermeidet, und andererseits die radiale Dicke der Umhüllung 6 berücksichtigt werden muss.

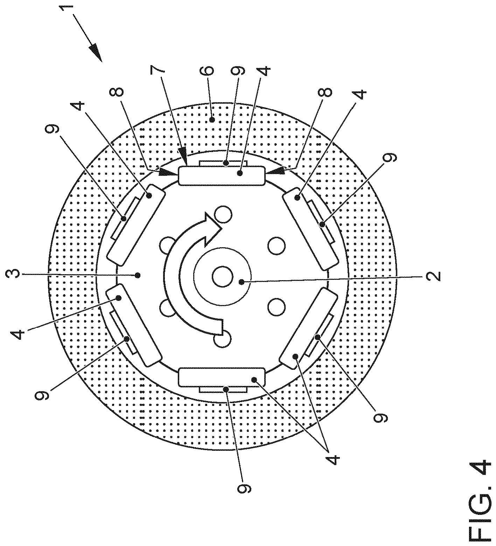

Ein Rotor 1, wie er in verschiedenen Ausgestaltungsformen in den Fig. 3 bis 9 dargestellt ist, vermeidet diesen Nachteil, indem im Bereich derjenigen Kanten, an denen die Außenflächen 7 der rechteckige Querschnittsflächen aufweisenden Permanentmagnete 4 in die jeweils dazugehörigen Seitenflächen 8 übergehen und die den kleinsten Abstand zu dem Stator 6 aufweisen, keine Umhüllung beziehungsweise keine Überdeckung der Permanentmagnete vorgesehen ist. Dementsprechend kann der Abstand zwischen den Permanentmagneten 4 und dem Stator 6 soweit verringert werden, dass im Bereich dieser Kanten der Abstand zwischen den Permanentmagneten 4 und dem Stator 6 derjenigen Spaltbreite entspricht, die konstruktiv vorgesehen sein muss, um unter Berücksichtigung zulässiger Form- und Lagetoleranzen einen Kontakt zwischen dem Rotor 1 und dem Stator 6 zu vermeiden. Die Fig. 2 und 3 im Vergleich verdeutlichen dieses Ergebnis.

Bei den in den Fig. 3 bis 9 dargestellten Ausgestaltungsbeispielen von Rotoren 1, die jeweils mit einem Stator 6 kombiniert werden sollen, der ein zylindrisches Innenvolumen begrenzt, wird dieses Ziel eines möglichst geringen (kleinsten) Abstands zwischen den Permanentmagneten 4 und dem Stator 6 dadurch erreicht, dass stegförmige Halteelemente 9 vorgesehen sind, die jeweils mindestens einen der Permanentmagnete 4 abschnittsweise außenseitig überdecken und dabei kontaktieren, wobei die Halteelemente 9 den oder die jeweils zugeordneten Permanentmagnete 4 entweder an deren Außenfläche 7 ausschließlich in einem bezüglich der Umfangsrichtung des Rotors 1 zentral und insbesondere exakt mittig gelegenen Abschnitt oder ausschließlich an einer Seitenfläche 8 je Permanentmagnet 4 überdecken.

Bei der Ausgestaltungsform eines Rotors gemäß den Fig. 3 bis 6 sind je Permanentmagnet 4 zwei Halteelemente 9 vorgesehen, von denen sich jeweils ein erstes Halteelement 9 ausgehend von einer ersten Stirnseite und ein zweites Halteelement 9 ausgehend von einer zweiten Stirnseite des zugehörigen Permanentmagnets 4 beziehungsweise des Grundkörpers 3 über einen Abschnitt der Längserstreckung des zugehörigen Permanentmagnets 4 erstreckt und die dabei die Außenfläche 7 des jeweils zugeordneten Permanentmagnets 4 überdecken. Dabei sind sämtliche der Halteelemente 9, die sich ausgehend von den ersten Stirnseiten der Permanentmagnete 4 beziehungsweise ausgehend von der ersten Stirnseite des Grundkörpers 3 erstrecken, mit einem ersten Verbindungsring 10 verbunden und konkret einstückig mit diesem ausgebildet, wobei dieser Verbindungsring 10 an den entsprechenden Stirnseiten der Permanentmagnete 4 und des Grundkörpers 3 lose anliegt. In gleicher Weise sind sämtliche der Halteelemente 9, die sich ausgehend von den zweiten Stirnseiten der Permanentmagnete 4 und des Grundkörpers 3 erstrecken, mit einem zweiten Verbindungsring 10 verbunden.

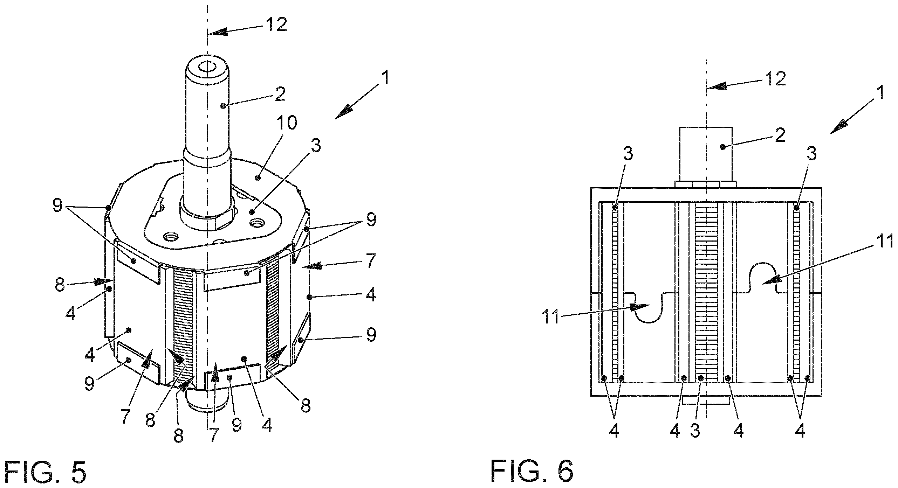

Die in den Fig. 3 bis 5 dargestellte Ausgestaltungsform eines erfindungsgemäßen Rotors 1 unterscheidet sich von derjenigen gemäß der Fig. 6 dahingehend, dass bei dieser die Halteelemente 9 relativ kurz ausgebildet sind, so dass sich diese lediglich über einen Abschnitt der Längserstreckung des jeweils zugehörigen Permanentmagnets 4 erstrecken, der deutlich kleiner als die Hälfte dieser Längserstreckung ist. Die die jeweiligen Permanentmagnete 4 überdeckenden Enden der Halteelemente 9 sind folglich frei ausgebildet. Um mittels solcher Halteelemente 9 eine ausreichend sichere Verbindung der Permanentmagnete 4 mit dem Grundkörper 3 zu realisieren, sollten diese Halteelemente 9 ausreichend stabil beziehungsweise biegesteif dimensioniert sein. Dazu bietet sich eine Ausgestaltung der Halteelemente 9 sowie der vorzugsweise damit einstückig ausgebildeten Verbindungsringe 10 aus Metall an.

Bei dem Rotor 1 gemäß der Fig. 6 ist dagegen vorgesehen, dass sich die einzelnen Halteelemente 9 jeweils über die Hälfte der Längserstreckung des zugehörigen Permanentmagnets 4 erstrecken, so dass die jeweils zwei Halteelemente 9, die einem Permanentmagneten 4 zugeordnet sind, in der längsaxialen Mitte dieses Permanentmagnets 4 aneinander anstoßen beziehungsweise einander kontaktieren. Dabei ist zusätzlich eine Verbindung zwischen diesen jeweils zwei Halteelementen 9 je Permanentmagnet 4 mittels einer Kombination einer Ausnehmung eines dieser Halteelemente 9 und eines in diese Ausnehmung eingreifenden Vorsprungs 11 des anderen dieser Halteelemente 9 vorgesehen.

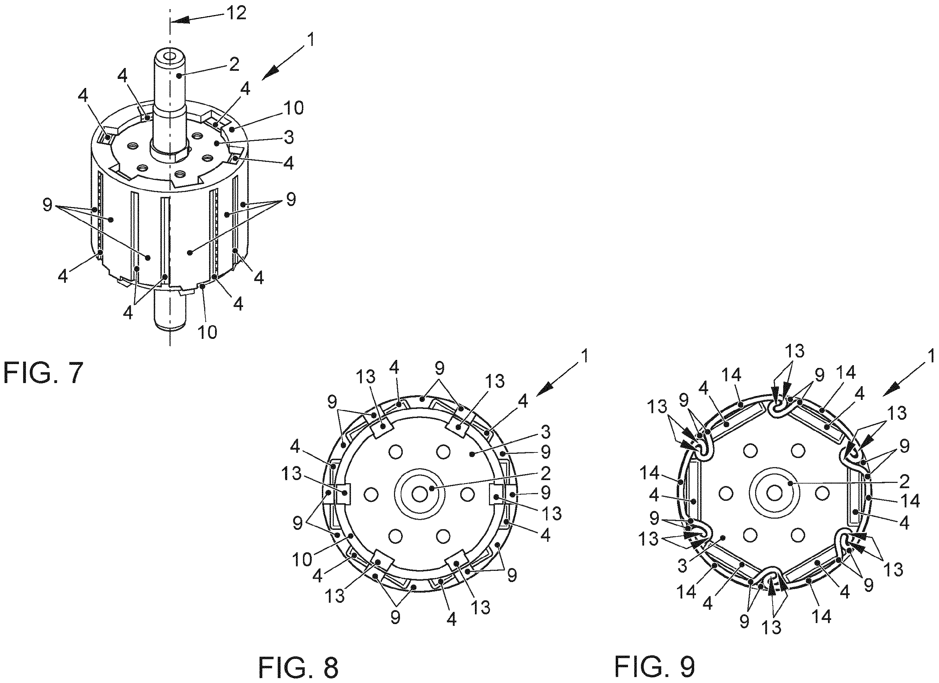

Bei den in den Fig. 7 bis 9 dargestellten Ausgestaltungsformen erfindungsgemäßer Rotoren 1 sind neben solchen Halteelementen 9, die die jeweils zugeordneten Permanentmagnete 4 ausschließlich in einem bezüglich der Umfangsrichtung des Rotors 1 zentral gelegenen Abschnitt ihrer Außenflächen 7 überdecken, auch solche Halteelemente 9 vorgesehen, die jeweils zwei benachbart gelegene Permanentmagnete 4 an deren jeweils aneinander angrenzenden Seitenflächen 8 überdecken. Dadurch kann eine größere Anzahl an Halteelementen 9 vorgesehen sein, wodurch eine ausreichend sichere Verbindung der Permanentmagnete 4 mit dem Grundkörper 3 auch mit jeweils relativ schwach dimensionierten Halteelementen 9 realisiert werden kann. Die Überdeckung der jeweils in einer Ebene verlaufenden Seitenflächen 8 der auch bei diesen Ausgestaltungsformen in Form von Blockmagneten mit rechteckigen Querschnittsflächen ausgebildeten Permanentmagnete 4 ergibt sich durch eine Anordnung dieser Seitenflächen derart, dass diese so gegenüber der exakt radialen Ausrichtung geneigt sind, dass sich mit einem zunehmenden radialen Abstand von der Rotationsachse 12 des Rotors 1 der Abstand angrenzender Seitenflächen 8 benachbarter Permanentmagnete 3 vergrößert. Dies ist insbesondere aus den Fig. 8 und 9 ersichtlich.

Konkret ist bei den Rotoren 1 gemäß den Fig. 7 bis 9 vorgesehen, dass sich sämtliche der Halteelemente 9, ausgehend von ersten Stirnseiten der Permanentmagnete 4 und des Grundkörpers 3, über die gesamte Längserstreckung der Permanentmagnete 4 erstrecken, wobei die Halteelemente 9 wiederum einstückig mit einem Verbindungsring 10, der an diesen ersten Stirnseiten lose anliegt, ausgebildet sind. Um eine möglichst hohe Belastbarkeit der Halteelemente 9 gegenüber einer radialen Aufweitung zu erreichen, ist weiterhin vorgesehen, dass zumindest diejenigen Halteelemente 9, die die jeweils zugeordneten Permanentmagnete 4 ausschließlich in einem bezüglich der Umfangsrichtung des Rotors 1 zentral gelegenen Abschnitt ihrer Außenflächen überdecken, im Bereich der zweiten Stirnflächen der Permanentmagnete 4 und des Grundkörpers 3 direkt (vgl. Fig. 9) oder indirekt (vgl. Fig. 7 und 8) miteinander verbunden sind.

Bei dem Rotor 1 gemäß den Fig. 7 und 8 dienen hierfür an dem jeweiligen längsaxialen Ende angeordnete, radial ausgerichtete Verbindungshaken 13, in denen ein weiterer Verbindungsring 10 geführt ist, der in dem konkreten Ausgestaltungsbeispiel in Form eines herkömmlichen O-Rings aus einem Elastomer ausgebildet ist. Dieser Verbindungsring 10 ist dabei im montierten Zustand elastisch vorgespannt beziehungsweise aufgeweitet, um einen ausreichenden Druck in der Anpressung derjenigen Halteelemente 9, die die Verbindungshaken 13 umfassen, gegen die jeweils zugehörigen Permanentmagnete 4 zu realisieren. Grundsätzlich ist es auch möglich, dass ausschließlich oder, besonders bevorzugt, zusätzlich auch die anderen Halteelemente 9, die die jeweils zugehörigen Permanentmagneten 4 an jeweils einer Seitenfläche 8 überdecken, mit entsprechenden Verbindungshaken 13 versehen sind, in denen der elastische Verbindungsring 10 geführt ist.

Alternativ oder zusätzlich zu der Verwendung eines Verbindungsrings 10 in Form eines O-Rings kann auch ein Verbindungsring 10 aus einem anderen Werkstoff, insbesondere aus einem (anderen) Kunststoff oder aus Metall, beispielsweise auch in Form eines einfach oder mehrfach durch die Verbindungshaken 13 geführten und an seinen Enden miteinander verbundenen Drahts, zum Einsatz kommen.

Bei dem Rotor 1 gemäß den Fig. 9 ist dagegen vorgesehen, dass die Halteelemente 9 an ihren entsprechenden längsaxialen Enden jeweils einen in Umfangsrichtung verlaufenden Verbindungssteg 14 aufweisen, dessen beide in Umfangsrichtung liegenden Enden hakenförmig ausgebildet sind und so als Verbindungshaken 13 dienen. Diese Verbindungshaken 13 sind dabei jedoch dafür vorgesehen und entsprechend ausgelegt, sich jeweils mit dem angrenzenden Verbindungshaken 13 eines benachbarten Verbindungsstegs 14 zu verhaken, um bei einer radial aufweitenden Belastung eine gegenseitige Abstützung zumindest derjenigen Halteelemente 9, die die jeweils zugeordneten Permanentmagnete 4 ausschließlich in einem bezüglich der Umfangsrichtung des Rotors 1 zentral gelegenen Abschnitt ihrer Außenflächen 7 überdecken, zu realisieren. Um eine entsprechende Abstützung auch für diejenigen Halteelemente 9, die die jeweils zugehörigen Permanentmagnete 4 an einer Seitenfläche 8 überdecken, zu realisieren, kann beispielsweise vorgesehen sein, dass die Verbindungsstege 14 zusätzlich auch mit diesen Halteelementen 9 verbunden beziehungsweise einstückig ausgebildet sind.

Um auch bei den Rotoren 1 gemäß den Fig. 7 bis 9 eine axiale Lagesicherung der Halteelemente 9 beziehungsweise der einstückig ausgebildeten Einheiten aus Verbindungsring 10, Halteelementen 9, Verbindungssteg 14 (bei dem Rotor 1 gemäß der Fig. 9) und Verbindungshaken 13 auf beziehungsweise relativ zu den Permanentmagneten 4 und dem diese tragenden Grundkörper 3 zu erzielen, erstrecken sich zumindest die Verbindungshaken 13 soweit radial nach innen, dass sich diese in einer teilweisen Überdeckung mit der dortigen Stirnseite des Grundkörpers 3 befinden, so dass diese als in längsaxialer Richtung wirksame Anschläge dienen.

### Bezugszeichenliste

- 1: Rotor
- 2: Rotorwelle
- 3: Grundkörper
- 4: Permanentmagnet
- 5: rohrförmige Umhüllung
- 6: Stator
- 7: Außenfläche eines Permanentmagnets
- 8: Seitenfläche eines Permanentmagnets
- 9: Halteelement
- 10: Verbindungsring
- 11: Vorsprung
- 12: Rotationsachse des Rotors
- 13: Verbindungshaken
- 14: Verbindungssteg

## Patentansprüche

1. Rotor (1) für eine elektrische Maschine, mit einer Rotorwelle (2), einem drehfest mit der Rotorwelle (2) verbundenen und die Rotorwelle (2) umgebenden Grundkörper (3) und einer Mehrzahl von Permanentmagneten (4), die außenseitig in einer ringförmigen Anordnung mit dem Grundkörper (3) verbunden sind, wobei eine Mehrzahl von stegförmigen Halteelementen (9), die jeweils mindestens einen der Permanentmagnete (4) abschnittsweise außenseitig kontaktieren, vorgesehen sind, wobei die Halteelemente (9) den oder die jeweils zugeordneten Permanentmagnete (4) entweder an deren Außenfläche (7) ausschließlich in einem bezüglich der Umfangsrichtung des Rotors (1) zentral gelegenen Abschnitt oder ausschließlich an einer Seitenfläche (8) je Permanentmagnet (4) überdecken, wobei die Außenfläche (7) der Permanentmagnete (4) diejenige Oberfläche ist, die die jeweiligen Permanentmagnete (4) radial außen liegend begrenzt und dabei die Querschnittsfläche dieser Permanentmagnete (4) bezüglich der Umfangsrichtung zum größten Teil und insbesondere zu mindestens 80% oder 90% begrenzt, **dadurch gekennzeichnet, dass**
• sich die Halteelemente (9) zumindest teilweise von den beiden Stirnseiten des Grundkörpers (3) und jeweils nur abschnittsweise über die entlang der Rotationsachse (12) des Rotors (1) führende Längserstreckung des oder der zugeordneten Permanentmagnete (4) erstrecken und an dem entsprechenden anderen axialen Ende frei enden und/oder
• sich die Halteelemente (9) zumindest teilweise jeweils vollständig entlang der Längserstreckung des oder der zugehörigen Permanentmagnete (4) erstrecken und an den beiden stirnseitigen Enden der Permanentmagnete (4) derart direkt oder indirekt miteinander verbunden sind, dass eine nach außen gerichtete radiale Belastung dieser Halteelemente (9) gegenseitig von den Halteelementen (9) abgestützt ist, wozu diese Halteelemente (9) mit einem ihrer längsaxialen Enden unlösbar an einen ersten Verbindungsring (10) angebunden sind und mit dem anderen ihrer längsaxialen Enden lösbar an einen zweiten Verbindungsring (10) angebunden oder miteinander verbunden sind.

2. Rotor (1) gemäß Anspruch 1, **dadurch gekennzeichnet, dass** die Permanentmagnete (4) außenseitig ausschließlich von den Halteelementen (9) überdeckt sind.

3. Rotor (1) gemäß Anspruch 1 oder 2, **dadurch gekennzeichnet, dass** die Permanentmagnete (4) rechteckige oder kreisringsegmentförmige Querschnittsflächen aufweisen.

4. Rotor (1) gemäß einem der vorhergehenden Ansprüche, **dadurch gekennzeichnet, dass** die Halteelemente (9) zumindest teilweise und/oder der oder die Verbindungsringe (10) aus Kunststoff ausgebildet sind.

5. Elektrische Maschine mit einem Rotor (1) gemäß einem der vorhergehenden Ansprüche und mit einem den Rotor (1) umgebenden Stator (6).

6. Elektrische Maschine gemäß Anspruch 5, **dadurch gekennzeichnet, dass** der Stator (6) ein zylindrisches Innenvolumen begrenzt.

## Claims

1. Rotor (1) for an electric machine, comprising a rotor shaft (2), a main body (3) which is connected to the rotor shaft (2) for conjoint rotation and surrounds the rotor shaft (2), and a plurality of permanent magnets (4) which are connected to the outside of the main body (3) in a ring-shaped arrangement, wherein a plurality of strip-shaped holding elements (9) are provided, each of which contacts at least one of the permanent magnets (4) in portions on the outside, wherein the holding elements (9) cover the respectively assigned permanent magnet or magnets (4) either on their outer surface (7) exclusively in a portion located centrally with respect to the circumferential direction of the rotor (1) or exclusively on a side surface (8) of each permanent magnet (4), wherein the outer surface (7) of the permanent magnets (4) is the surface which delimits the respective permanent magnets (4) radially on the outside and thereby delimits the cross-sectional area of these permanent magnets (4) in relation to the circumferential direction to the greatest extent and in particular to at least 80% or 90%, **characterized in that**
• the holding elements (9) extend at least partially from the two end faces of the main body (3) and in each case only in portions over the longitudinal extension of the associated permanent magnet or magnets (4) that runs along the rotational axis (12) of the rotor (1), and end freely at the corresponding other axial end and/or
• the holding elements (9) extend at least partially completely along the longitudinal extension of the associated permanent magnet or magnets (4) and are connected to one another directly or indirectly at the two end-face ends of the permanent magnets (4) in such a way that an outwardly directed radial load on these holding elements (9) is mutually supported by the holding elements (9), for which purpose these holding elements (9) are non-detachably connected to a first connecting ring (10) with one of their longitudinal-axial ends and are detachably connected to a second connecting ring (10) or connected to one another with the other of their longitudinal-axial ends.

2. Rotor (1) according to claim 1, **characterized in that** the permanent magnets (4) are covered on the outside exclusively by the holding elements (9).

3. Rotor (1) according to claim 1 or 2, **characterized in that** the permanent magnets (4) have rectangular or circular-ring-segment shaped cross-sectional areas.

4. Rotor (1) according to any one of the preceding claims, **characterized in that** the holding elements (9) are at least partially made of plastic and/or the connecting ring or rings (10) are made of plastic.

5. Electric machine comprising a rotor (1) according to any one of the preceding claims and comprising a stator (6) surrounding the rotor (1).

6. Electric machine according to claim 5, **characterized in that** the stator (6) defines a cylindrical internal volume.

## Revendications

1. Rotor (1) pour une machine électrique, comportant un arbre de rotor (2), un corps de base (3) relié de manière solidaire en rotation à l'arbre de rotor (2) et entourant l'arbre de rotor (2), et une pluralité d'aimants permanents (4) qui sont reliés côté extérieur au corps de base (3) dans un agencement annulaire, dans lequel une pluralité d'éléments de retenue (9) en forme de barrette sont prévus, lesquels sont respectivement en contact dans certaines sections et côté extérieur avec au moins l'un des aimants permanents (4), dans lequel les éléments de retenue (9) recouvrent le ou les aimants permanents (4) respectivement associés, soit sur leur surface extérieure (7) exclusivement dans une section située au centre par rapport à la direction circonférentielle du rotor (1), soit exclusivement sur une surface latérale (8) de chaque aimant permanent (4), dans lequel la surface extérieure (7) des aimants permanents (4) est la surface située radialement à l'extérieur qui délimite les aimants permanents (4) respectifs et qui délimite ainsi la surface de section transversale desdits aimants permanents (4) par rapport à la direction circonférentielle pour la plus grande partie et en particulier pour au moins 80 % ou 90 %, **caractérisé en ce que**
• les éléments de retenue (9) s'étendent au moins partiellement à partir des deux côtés frontaux du corps de base (3) et respectivement, seulement dans certaines sections, au-dessus de l'extension longitudinale du ou des aimants permanents (4) associés, laquelle mène le long de l'axe de rotation (12) du rotor (1), et se terminent librement au niveau de l'autre extrémité axiale correspondante et/ou
• les éléments de retenue (9) s'étendent au moins partiellement respectivement complètement le long de l'extension longitudinale du ou des aimants permanents (4) correspondants et sont reliés directement ou indirectement entre eux au niveau des deux extrémités frontales des aimants permanents (4) de telle sorte qu'une charge radiale desdits éléments de retenue (9) dirigée vers l'extérieur est réciproquement soutenue par les éléments de retenue (9), ce pourquoi lesdits éléments de retenue (9) sont reliés de manière inamovible par l'une de leurs extrémités axiales longitudinales à un premier anneau de liaison (10) et sont reliés de manière amovible par l'autre de leurs extrémités axiales longitudinales à un second anneau de liaison (10) ou sont reliés entre eux.

2. Rotor (1) selon la revendication 1, **caractérisé en ce que** les aimants permanents (4) sont recouverts côté extérieur exclusivement par les éléments de retenue (9).

3. Rotor (1) selon la revendication 1 ou 2, **caractérisé en ce que** les aimants permanents (4) présentent des surfaces de section transversale rectangulaires ou en forme de segment d'anneau circulaire.

4. Rotor (1) selon l'une des revendications précédentes,
**caractérisé en ce que** les éléments de retenue (9) sont réalisés au moins partiellement en matière plastique et/ou le ou les anneaux de liaison (10) sont réalisés en matière plastique.

5. Machine électrique comportant un rotor (1) selon l'une des revendications précédentes et comportant un stator (6) entourant le rotor (1).

6. Machine électrique selon la revendication 5, **caractérisée en ce que** le stator (6) délimite un volume intérieur cylindrique.
